# EUROPEAN PATENT APPLICATION

(11) **EP 4 769 815 A1**
(43) Date of publication of application: **01.07.2026**
(21) Application number: 24889066.7
(22) Date of filing: 04.11.2024
(51) Int. Cl.: H01M 50/538, H01M 50/528, H01M 50/167, H01M 50/152, H01M 50/531

(54) **SECONDARY BATTERY ELECTRODE CURRENT COLLECTOR AND CYLINDRICAL SECONDARY BATTERY USING SAME**

(30) Priority: 07.11.2023 KR 20230152816; 14.10.2024 KR 20240139347
(71) Applicant: LG Energy Solution, Ltd., Seoul 07335 (KR)
(72) Inventor: HWANG BO, Kwang Su, Daejeon 34122 (KR); LEE, Dasom, Daejeon 34122 (KR); KIM, Do Gyun, Daejeon 34122 (KR); KO, Kwang Hun, Daejeon 34122 (KR); LEE, Hojun, Daejeon 34122 (KR)
(74) Representative: Goddar, Heinz J.
(86) International application number: PCT/KR2024/017191
(87) International publication number: WO 2025/100878

(57) **Abstract**

Disclosed are: an electrode current collector structure that does not affect an electrode assembly, even if deformed by crimping; and a secondary battery using same. The current collector comprises: a main body part; a can connection part disposed more outward in the axial direction and in the radial direction than the main body part; and a bridge extending in the radial direction and connecting the main body part and the can connection part. The bridge includes an inner bent part, an inner bridge part, a bridge bent part, an outer bridge part and an outer bent part.

## Description

### [TECHNICAL FIELD]

This application claims the benefit of priority based on Korean Patent Application No. 10-2023-0152816 filed on November 7, 2023 and Korean Patent Application No. 10-2024-0139347 filed on October 14, 2024, entire content disclosed in the document of the patent applications is included as a part of this specification.

The present invention relates to an electrode current collecting plate of secondary batteries and a cylindrical secondary battery employing the same that does not affect the electrode assembly even when deformed by crimping.

### [BACKGROUND ART]

The process of manufacturing a battery cell using a cylindrical can includes the steps of: subjecting a metal sheet to deep drawing to form a circular bottom portion and a circular tubular side wall connected thereto; accommodating an electrode assembly therein; and then covering the open end of the sidewall with a cap.

A typical method of covering the open end of the sidewall with a cap includes forming a beading on the sidewall, interposing a cap gasket on the axially outer surface of the beading, and forming a crimped portion that compresses the edge of the cap.

Meanwhile, in order to increase the energy density of the can and expand the current path, a structure is being applied in which a portion of the electrode foil is exposed in axial direction at the axial end of the electrode assembly, then bent radially to form an electrode tab, and a current collecting plate electrically connects the electrode tab to the can.

As for the current collecting plate, manufactured as a metal plate, the body thereof is stacked on the electrode tab of the electrode assembly in the axial direction to be and bonded to and electrically connected to the electrode tab of the electrode assembly, and the radial edge thereof is in contact with and electrically connected to the can or cap.

Here, in the structure wherein the beading and crimped portion is processed and the open end of the can is closed with the cap, the edge of the current collecting plate may be interposed between and compressed against the axially outer surface of the beading and the inward bent portion of the crimped portion in order to bring the edge of the current collecting plate into contact with the can or cap.

Since the crimped portion involves plastically forming the sidewall of the can to crimp the edge of the cap with the cap gasket therebetween, a significant external force is applied to crimp the cap and cap gasket.

However, when the external force applied during the crimping process is transmitted to the current collecting plate, which has relatively weaker rigidity than the sidewall, the current collecting plate may be deformed in an unintended direction, damaging the electrode assembly. Alternatively, the external force applied during the crimping process may be directly transmitted to the electrode assembly resulting in the damage of the electrode assembly.

### [DISCLOSURE]

### [TECHNICAL PROBLEM]

In order to solve above-described problems, it is an object of the present invention to provide a structure of a current collecting plate and a structure of a secondary battery structure employing the same capable of inducing deformation in a direction that does not damage the electrode assembly even when subjected to external force during the crimping process.

In addition, it is an object of the present invention to provide a structure of a current collecting plate and a structure of a secondary battery structure employing the same capable of minimizing the effect of the force applied to process the sidewall on the electrode assembly even when the current collecting plate is deformed in an unintended direction.

The technical problems to be solved by the present invention are not limited to the objects described above, and other objects and advantages of the present invention that are not described may be understood through the following description and will be more clearly understood by the examples of the present invention. Additionally, it is apparent that the objects and advantages of the present invention may be embodied by the means and combinations thereof indicated in the claims.

### [TECHNICAL SOLUTION]

In order to solve above-described problems, the present invention may be applied to a battery cell including an electrode assembly, a current collecting plate electrically connected to the electrode assembly, and a can accommodating the electrode assembly and the current collecting plate.

The can may include a sidewall extending in the axial direction and an open end provided at one axial end of the sidewall.

The battery cell may include a cap covering the open end.

A first end wall is connected to the opposite axial end of the sidewall, thereby forming a closed end at the opposite axial end of the sidewall.

The electrode assembly may be in the form of a jelly-roll wound around a predetermined axis.

An electrode tab is provided at one of the two axial ends of the electrode assembly corresponding to the open end, and the current collecting plate may be electrically connected to the electrode tab.

The current collecting plate may be electrically connected to the can or cap.

The cap may be fixed to the sidewall of the can by having the edge thereof compressed against a beaded portion and a crimped portion provided at the open end of the can.

A cap gasket may be interposed between the edge of the cap and the sidewall.

The edge of the cap may be compressed against the beading and the crimped portion with the cap gasket interposed therebetween, thereby sealing the connecting portion between the cap and the can.

The current collecting plate includes a body in contact with and electrically connected to the electrode tab.

The body may include an extension bonded to the electrode tab.

The body may further include an inner ring connected to the extension at a radially inner side of the extension. The inner ring may also be bonded to the electrode tab.

The bonding between the body and the electrode tab may be achieved by welding, brazing, or soldering. Preferably, the bonding may be achieved by laser welding wherein a laser is irradiated onto the surface of the extension.

The current collecting plate includes a can connecting portion connected to at least one of the sidewall and the cap.

The can connecting portion may be electrically connected to the body.

The can connecting portion may be disposed radially outer than the body.

The can connecting portion may be disposed axially outer than the body.

The current collecting plate includes a bridge extending in radial direction and having an inner radial end connected to the body and an outer radial end connected to the can connecting portion.

The bridge includes, from radially inner side to radially outer side, an inner bent portion, an inner bridge, a bridge bent portion, an outer bridge and an outer bent portion.

The present invention provides a current collecting plate usable in the above-described cylindrical secondary battery.

The diameter of the current collecting plate may be equal to or greater than 35mm and equal to less than 46mm.

The current collecting plate includes a body in contact with and electrically connected to the electrode tab.

The current collecting plate includes: a can connecting portion disposed axially outer and radially outer than the body and provided to be in contact with and electrically connected to at least any one of a can accommodating the electrode assembly and a cap covering an open end of the can.

The current collecting plate includes a bridge extending in a radial direction and having an inner radial end connected to the body and an outer radial end connected to the can connecting portion.

The bridge includes: an inner bridge connected to the body through an inner bent portion bent axially outward from an outer radial end of the body by a first angle, the inner bridge extending radially outward and axially outward from the inner bent portion.

The bridge includes: an outer bridge connected to the inner bridge through a bridge bent portion bent radially outward from an outer radial end of the inner bridge by a second angle, and extending radially outward from the bridge bent portion.

The can connecting portion is connected to the outer bridge through an outer bent portion provided at an outer radial end of the outer bridge.

The can connecting portion may have a shape having a width larger than that of the outer bent portion.

In one embodiment, the first angle of the current collecting plate provided before assembling the cylindrical secondary battery may be equal to or greater than 60 degrees and equal to or less than 75 degrees.

Preferably, a third slope calculated as a ratio of axially outer side to radially outer side of the can connecting portion may be equal to or greater than 20 degrees and equal to or less than 35 degrees.

Preferably, the can connecting portion may be bent radially outward by a third angle at the outer radial end of the outer bridge by the outer bent portion of the current collecting plate provided before th assembly of the cylindrical secondary battery.

Preferably, the third angle may be equal to or greater than 5 degrees and equal to or less than 20 degrees.

Preferably, the second angle of the current collecting plate provided before the assembly of the cylindrical secondary battery may be equal to or greater than 25 degrees and equal to or less than 40 degrees.

Preferably, a first extension length of the inner bridge may be equal to or greater than 0.5 times and equal to or less than 2 times a second extension length of the outer bridge.

In another embodiment, a second moment of area of the outer bridge as viewed in an extending direction of the outer bridge may be greater than that of the inner bridge as viewed in an extending direction of the inner bridge.

Preferably, a reinforcing portion where a widthwise end of the outer bridge may be bent axially inwardly may be provided at a widthwise edge of the outer bridge.

Preferably, the body may include an extension extending radially outward from the outer radial end of the body.

The bridge may be disposed between the extensions in the circumferential direction.

The extensions and the bridges may be respectively provided as four.

The first width of a connecting portion between the extension and the body may be 1.5 to 2.5 times the second width of the connecting portion between the bridge and the body.

The present invention provides a cylindrical secondary battery employing the above-described current collecting plate.

The cylindrical secondary battery includes: an electrode assembly provided with electrode tabs at the axial end thereof; a can accommodating the electrode assembly; a cap covering the open end of the can; and a current collecting plate.

The can is provided with a beading where a sidewall of the can is recessed radially inward between the electrode assembly and the cap in the axial direction.

The can connecting portion of the current collecting plate is in contact with an axially outer surface of the beading.

The edge of the cap is compressed by the beading and a crimped portion of the sidewall with a cap gasket interposed therebetween.

The can connecting portion is interposed between the cap gasket and the beading.

The can connecting portion may be bent axially outward from an outer radial end of an outer bridge by an outer bent portion with the current collecting plate assembled in the cylindrical secondary battery.

The outer bridge may have a second slope extending axially inward from a bridge bent portion as extends radially outward with the current collecting plate assembled in the cylindrical secondary battery.

The third angle of the current collecting plate provided before the assembly of the cylindrical secondary battery may be inverted with the current collecting plate assembled in the cylindrical secondary battery.

The second angle of the current collecting plate with the current collecting plate assembled in the cylindrical secondary battery may be greater than that of the current collecting plate provided before assembly of the cylindrical secondary battery.

The first angle of the current collecting plate with the current collecting plate assembled in the cylindrical secondary battery may be greater than that of the current collecting plate provided before assembly of the cylindrical secondary battery.

### [ADVANTAGEOUS EFFECTS]

According to the present invention, even when an external force is transmitted in the extending direction of the bridge during the can crimping and/or sizing process, the first angle and/or second angle are set such that the external force induces bending of the inner bent portion and/or the bridge bent portion. Accordingly, the external force applied to the current collecting plate during the crimping process acts to increase the bending angles of the inner bent portion and the bridge bent portion. Therefore, even when the current collecting plate is deformed, the deformation does not cause damage to the electrode assembly.

According to the present invention, even when an external force is transmitted in the extending direction of the bridge during the can crimping and/or sizing process, the bending rigidity of the outer bridge is secured to be greater than those of other portions, thereby inducing bending of the inner bent portion and/or the bridge bent portion by the external force. Therefore, even when the current collecting plate is deformed, the deformation does not cause damage to the electrode assembly.

According to the present invention, even when an external force is transmitted in the extending direction of the bridge during the can crimping and/or sizing process, the bending rigidity of the outer bridge portion is secured to be greater than those of other portions, thereby inducing reversal of the outer bent portion by the external force. Accordingly, the external force applied to the current collecting plate during the crimping process acts to significantly increase the bending angle of the inner bent portion and the bridge bent portion. Therefore, even when the current collecting plate is deformed, the deformation does not cause damage to the electrode assembly.

According to the present invention, by reducing the bridge width with minimal increase in internal resistance, the buckling resistance of the bridge is lowered to the point where the external force acting in the extending direction of the bridge is not transmitted to the body. Accordingly, even when deformation of the bridge and/or can connecting portion occurs during the handling of the current collecting plate prior to assembly, resulting in deformation of the current collecting plate in an unintended direction during the can crimping and/or sizing process, damage to the electrode assembly may be minimized.

In addition to the advantageous effects described above, specific effects of the present invention will be described further while describing specific details of the present invention.

### [BRIEF DESCRIPTION OF DRAWINGS]

FIG. 1 is an exploded perspective view of electrodes and separator of an electrode assembly accommodated in a can before winding.
FIG. 2 is a perspective view of laminated electrodes and separator of the electrode assembly of FIG. 1 before winding.
FIG. 3 is a diagram schematically illustrating a process of winding the electrodes and separator around a core.
FIG. 4 is a perspective view of the assembled cylindrical jelly-roll electrode assembly by winding in the laminated electrodes and separator of FIG. 2 as shown in FIG. 3.
FIG. 5 is a perspective view of an electrode tab of the electrode assembly of FIG. 4, folded radially inward.
FIG. 6 is a perspective view of a first current collector plate bonded to a first electrode tab provided at the first axial end of the electrode assembly facing a first end wall of the can.
FIG. 7 is a perspective view illustrating a second current collector plate bonded to a second electrode tab provided at the second axial end of the electrode assembly facing the second end wall of the can.
FIG. 8 is a perspective view illustrating a cylindrical battery cell.
FIG. 9 is a front cross-sectional view illustrating the cylindrical battery cell of FIG. 15.
FIG. 10 is a plan view and side view illustrating a current collecting plate applied to a cylindrical battery cell according to a comparative example.
FIG. 11 illustrates a plan view illustrating a portion the current collecting plate of FIG. 10.
FIG. 12 is an enlarged side view schematically illustrating a portion of the current collecting plate of FIG. 10.
FIGS. 13 to 17 schematically illustrate a process of assembling the current collecting plate of FIG. 12 into the can.
FIG. 18 is a cross-sectional photograph illustrating damage to the electrode assembly due to abnormal deformation of the current collecting plate according to a comparative example.
FIG. 19 is plan view and side view illustrating a current collecting plate applied to a cylindrical battery cell according to a first embodiment.
FIG. 20 is plan view and side view of a current collecting plate applied to a cylindrical battery cell according to a second embodiment.
FIG. 21 is an enlarged perspective view illustrating a bridge and a can connecting portion of the current collecting plate of FIG. 20.
FIG. 22 a plan view illustrating a portion of the current collecting plate according to the embodiment.
FIGS. 23 to 27 schematically illustrate a process of assembling the current collecting plate into the can according to an embodiment.

### [DESCRIPTION OF REFERENCE NUMERALS]

10: can (housing)
11: sidewall
116: beading
1161: axially outer surface
117: crimped portion
1171: inward bent portion
12: first end wall (second electrode terminal)
14: first electrode terminal
15: terminal gasket
16: second end wall
161: constricted ring
162: cap body
163: weak portion
17: lid gasket
19: insulator
20: electrode assembly
21: first electrode
22: second electrode
23: current collector
24: active material
25: coated portion
26: non-coated portion
27: electrode tab (notched tab)
28: separator
29: core cavity
290: core shaft
31: first current collector plate (anode current collecting plate)
311: terminal connecting area
312: electrode connecting area
313: interconnecting portion
32: second current collector plate (cathode current collecting plate)
320: body
321: inner ring
322: hole
323: extension
W1: first width
324: can connecting portion
b3: third slope
33: bridge
W2: second width
331: inner bent portion
a1: first angle
332: outer bent portion
a3: third angle
333: inner bridge
b1: first slope
L1: first extension length
334: bridge bent portion
a2: second angle
335: outer bridge
b2: second slope
L2: second extension length
336: reinforcing portion
39: welded portion
70: battery cell

### [DETAILED DESCRIPTION OF THE PREFERRED EMBODIMENTS]

The above-described objects, features and advantages will be described in detail hereinafter with reference to the accompanying drawings such that those skilled in the art will be able to implement the technical idea of the present invention. In describing the present invention, when it is determined that a detailed description of prior art related to the present invention unnecessarily obscures the gist of the present invention, the detailed description thereof will be omitted. Hereinafter, preferred embodiments according to the present invention will be described in detail with reference to the accompanying drawings. In the drawings, identical reference numerals are used for indicating identical or similar components.

While "first", "second", etc. are used to describe various elements, these elements are of course not limited by these terms. These terms are only used to distinguish one element from another, and unless specifically stated otherwise, a first element may also be a second element.

Throughout the specification, unless stated otherwise, each element may be singular or plural.

Hereinafter, "arranging an element at upper portion (or lower portion) of another element" or "arranging an element at top (or bottom) of another element" refers to not only "arranging an element to be in contact with upper surface (or lower surface) of another element" but also to "arranging an element above upper surface (or lower surface) of another element with yet another element interposed therebetween."

Additionally, when an element is described as being "connected to," "coupled to," or "in contact with" another element, it should be understood that the element may be "directly connected to," "directly coupled to," or "directly in contact with" another element, or the element may be "connected to," "coupled to," or "in contact with" another element with yet another element interposed therebetween or via yet another element.

The expressions in singular form used herein include expressions in plural form unless the context explicitly dictates otherwise. Terms such as "consists of" or "comprises" used herein should not be construed as necessarily including all of the elements or steps described in the specification, and should be construed as not including some of the elements or steps, or including additional elements or steps.

Throughout the specification, "A and/or B" refers to A, B or A and B unless specifically stated otherwise, and "C to D" refers to from equal to or higher than C to equal to or lower D unless specifically stated otherwise.

In the description of the embodiments, "axial direction" refers to "a direction in which the axis constituting the winding center of the jelly-roll type electrode assembly extends", and "radial direction" refers to "a direction toward (centripetal) or away (centrifugal) from the axis," and "circumferential direction" refers to "a direction surrounding the axis."

The battery cell to which the current collector plate according to the embodiment is applied may be, for example, a cylindrical battery cell having a form factor ratio greater than approximately 0.4. Here, the form factor refers to values representing the diameter and the height of a cylindrical battery cell. Here, the form factor ratio may be defined as a value obtained by dividing the diameter of the cylindrical battery cell by the height thereof, i.e., the ratio of the diameter Φ to the height H.

The cylindrical battery cell may be, for example, a 46110 cell, a 48750 cell, a 48110 cell, a 48800 cell or a 46800 cell. In the values representing the form factor, the first two numbers represent the diameter of the cell, the next two numbers represent the height of the cell, and the last number 0 represents that the cross-section of the cell is circular.

The battery cell may be a cell that is approximately cylindrical with a diameter of approximately 46mm, a height of approximately 110mm and a form factor ratio of 0.418.

A battery cell according to another embodiment may be a cell that is approximately cylindrical with a diameter of approximately 48mm, a height of approximately 75mm and a form factor ratio of 0.640.

A battery cell according to yet another embodiment may be a cell that is approximately cylindrical with a diameter of approximately 48mm, a height of approximately 110mm and a form factor ratio of 0.418.

A battery cell according to yet another embodiment may be a cell that is approximately cylindrical with a diameter of approximately 48mm, a height of approximately 80mm and a form factor ratio of 0.600.

A battery cell according to another embodiment may be a cell that is approximately cylindrical with a diameter of approximately 46mm, a height of approximately 80mm and a form factor ratio of 0.575.

The present invention may be apparently applied to battery cells with a form factor ratio of approximately 0.4 or less, for example, 18650 cells, 21700 cells, etc. For an 18650 cell, its diameter is approximately 18mm, its height is approximately 65mm, and the form factor ratio is 0.277. For a 21700 cell, its diameter is approximately 21mm, its height is approximately 70mm, and the form factor ratio is 0.300.

### [CYLINDRICAL BATTERY CELL]

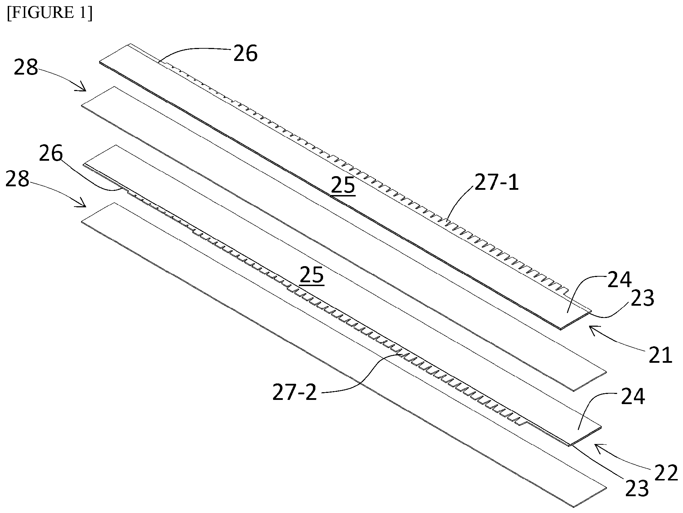

Referring to FIGS. 1 to 9, a cylindrical battery cell 70 according to a first embodiment includes: an electrode assembly 20; a current collecting plates 31 and 32 electrically connected to the electrode assembly 20; and a housing 10 accommodating the electrode assembly 20 and the current collecting plates 31 and 32.

### <ELECTRODE ASSEMBLY>

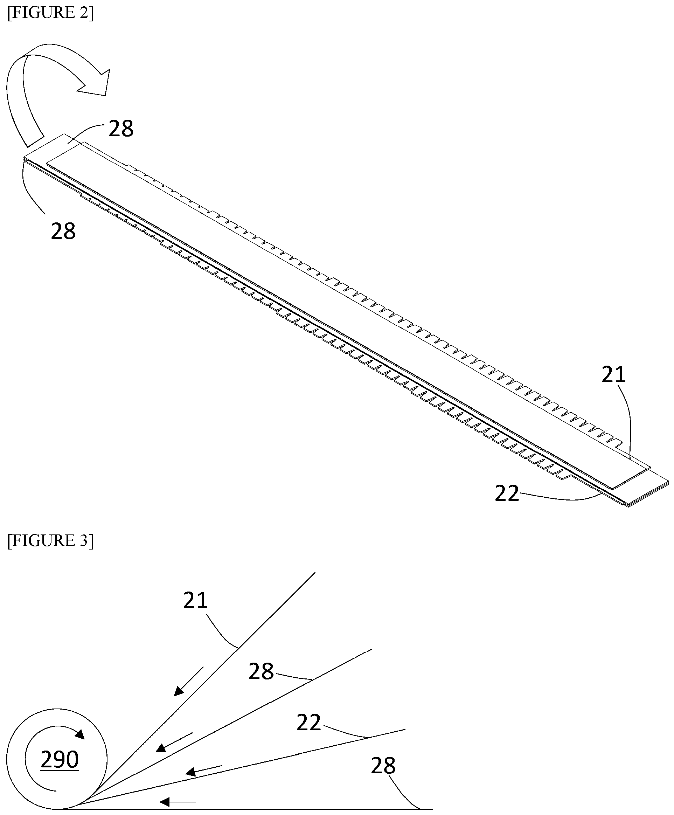

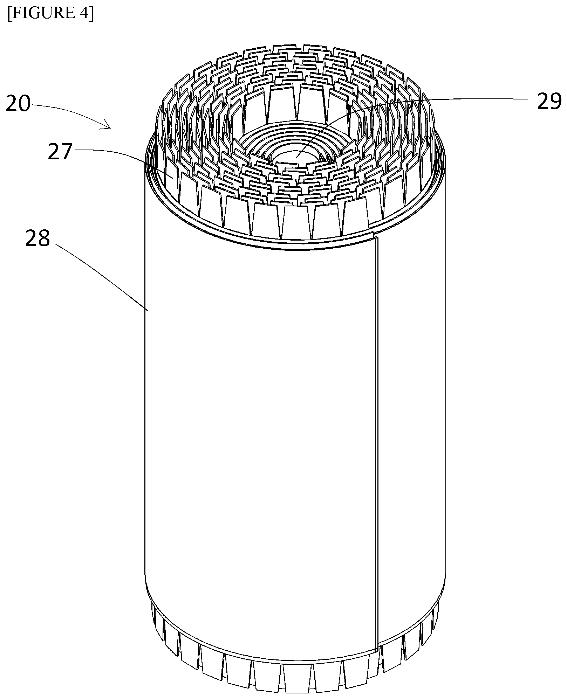

The electrode assembly 20 is manufactured by preparing a first electrode 21, a second electrode 22, and a separator 28 that have a predetermined width and extend in a lengthwise direction as shown in FIG. 1, sequentially stacking the first electrode 21, the separator 28, the second electrode 22, and the separator 28 as shown in FIG. 2, and winding the stacked structure into a jelly-roll form around a core shaft 290 as shown in FIG. 4.

One of the first electrode 21 and the second electrode 22 may be an anode, and the other may be a cathode. In the embodiment, the first electrode 21 is embodied as anode and the second electrode 22 is embodied as cathode.

The first electrode 21 and the second electrode 22 are manufactured in the form of sheets having a predetermined width and extending in lengthwise direction. The electrode is manufactured by applying an active material 24 on the current collecting plate 23.

The current collector 23 may be made of metal foil. One of the current collector 23 of the first electrode 21 and the current collector 23 of the second electrode 22 may be made of aluminum, and the other may be made of copper. In the embodiment, the current collector 23 of the first electrode 21 is made of aluminum foil, and the current collector 23 of the second electrode 22 is made of copper foil.

The electrode may include not only a region of the current collector 23 coated with an active material 24, but also a region of the current collector 23 where the active material 24 is not coated. To facilitate description, within the two-dimensional region defined by the sheet-shaped current collector 23, the region where the active material 24 is coated and capable of causing a battery reaction is referred to as the coated portion 25 of the electrode, and the region where the active material 24 is not coated and thus does not cause a battery reaction is referred to as the non-coated portion 26 of the electrode.

The non-coated portion 26 of the electrode may be provided for functions or operations other than battery reactions. For example, the non-coated portion 26 may provide an electrode tab 27 that electrically connects the electrode to the electrode terminal. Specifically, the current collector 23 of the non-coated portion 26 itself may be utilized as the electrode tab 27, or a separate tab member may be bonded to the current collector 23 of the non-coated portion 26 to provide the electrode tab.

According to the embodiment, the first electrode 21 has a non-coated portion 26 provided at the first widthwise end thereof, and the second electrode 22 has a non-coated portion 26 provided at the second widthwise end thereof.

Referring to FIGS. 2 and 4, the non-coated portion 26 protrudes from the electrode laminate or jelly roll in the widthwise direction or toward axially outer side. The non-coated portion 26 itself functions as an electrode tab 27. In the widthwise or axial direction, the inner end of the non-coated portion 26 is disposed inner than the outer end of the separator 28, and the outer end of the non-coated portion 26 is disposed outer than the outer end of the separator 28.

Referring to FIGS. 1 and 2, the non-coated portion 26 may be provided with cut lines at a predetermined interval to provide a plurality of flag-shaped electrode tabs 27 arranged in lengthwise direction.

In the embodiment, the electrode tabs 27 having a shape of an isosceles trapezoid are exemplified. Alternately, the electrode tabs 27 may have various shapes such as a semicircle, a semi-ellipse, a triangle, a rectangle, a parallelogram, etc.

In the embodiment, the electrode tabs 27 having the same width (lengthwise dimension) and arranged along the lengthwise direction are exemplified. However, the width of the electrode tabs may be gradually or stepwisely increased from the core toward the outer circumference.

In addition, in the embodiment, the electrode tabs 27 with gradually increasing height (axial dimension) from the core toward the outer circumference are exemplified. However, the height of the electrode tabs may be a constant or may decrease gradually.

In addition, in the embodiment, exemplified is a structure with electrode tabs 27 removed from predetermined sections of the centripetal end and the centrifugal end of the non-coated portion 26. However, it is also apparent that the electrode tabs are not removed from the centripetal end of the non-coated portion, the electrode tabs are not removed from the centrifugal end of the non-coated portion, and the electrode tabs are not removed from neither of the centripetal end and the centrifugal end of the non-coated portion.

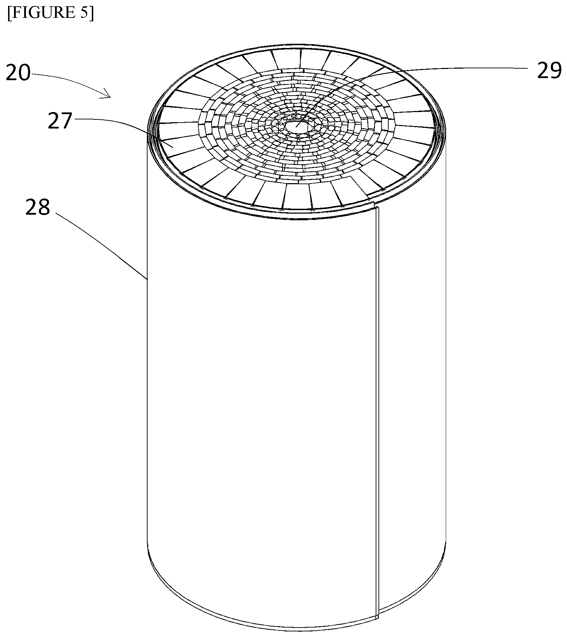

In the jelly-roll type electrode assembly 20, the electrode tab 27 may be bent in the radial direction and flattened as shown in FIG. 5. The electrode tab 27 may be bent radially inward or radially outward. In the embodiment, exemplified is a structure with the electrode tabs 27 bent radially inward.

The electrode tabs 27 may be bent one by one during the process of forming the jelly-roll type electrode assembly 20 by winding the laminate as shown in FIG. 3. Alternatively, the electrode tabs 27 may be bent all at once after the jelly-roll type electrode assembly is formed by winding the laminate as shown in FIG. 4.

The electrode tabs 27 of the first electrode 21 and the electrode tabs 27 of the second electrode 22 that are folded and overlapped in the radial direction may provide first and second planes substantially perpendicular to the axial direction at two axial ends of the electrode assembly 20, respectively.

### <CURRENT COLLECTING PLATE>

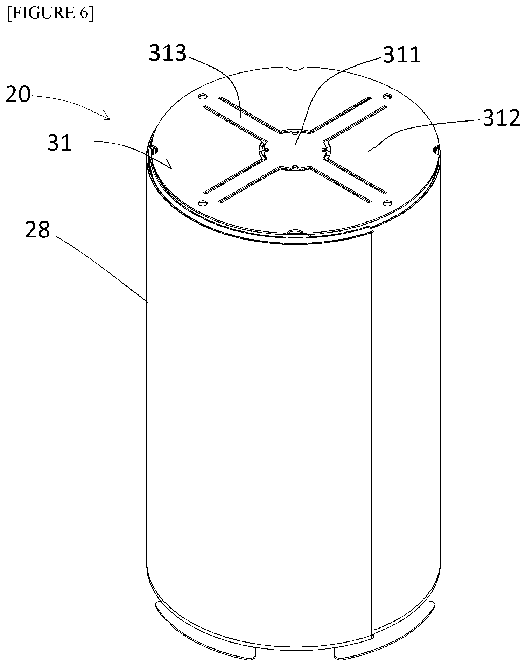

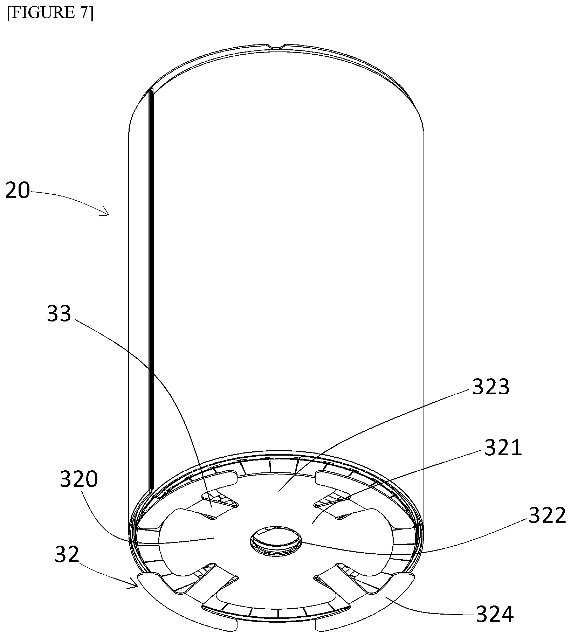

As shown in FIGS. 6 and 7, the first current collecting plate 31 and the second current collecting plate 32 may be bonded to the substantially flat first and second surfaces provided by the electrode tabs 27 exposed at the two axial ends of the electrode assembly 20, respectively.

One of the first current collecting plate 31 and the second current collecting plate 32 may be an anode current collecting plate, and the other may be a cathode current collecting plate. In the embodiment, the first current collecting plate 31 is embodied as anode current collecting plate and the second current collecting plate 32 is embodied as cathode current collecting plate.

The first current collecting plate 31 and the second current collecting plate 32 may include aluminum material or copper material. In the embodiment, the first current collecting plate 31 includes aluminum material, and the second current collecting plate 32 includes copper material.

The current collecting plates 31 and 32 may be manufactured by punching, trimming, piercing and bending a metal sheet.

Referring to FIG. 6, the first current collector plate 31 includes: a terminal connecting area 311 provided in a portion corresponding to the core cavity 29 of the electrode assembly 20; and an electrode connecting area 312 provided around the terminal connecting area 311. The terminal connecting area 311 is positioned at the center of the first current collector plate 31 and is provided to cover at least a portion of the core cavity 29 of the electrode assembly 20 in axial direction. The electrode connecting area 312 is provided to surround the terminal connecting area 311 while being spaced apart in radial direction from the terminal connecting area 311.

The terminal connecting area 311 and the electrode connecting area 312 are physically and electrically connected to each other via an interconnecting portion 313. The interconnecting portion 313 extends radially, is connected to the terminal connecting area 311 at the radially inner side, and is connected to the electrode connecting area 312 at the radially outer side.

In the embodiment, the interconnecting portion 313 may extend radially with respect to the terminal connecting area 311 and a plurality of interconnecting portions 313 may be arranged in the circumferential direction. The interconnecting portion 313 may have a radial length greater than the circumferential width thereof.

The electrode connecting area 312 may be bonded to and electrically connected to the first electrode tab 27-1 provided at the first electrode 21 of the electrode assembly 20. The terminal connecting area 311 may be bonded to and electrically connected to the first electrode terminal 14, which will be described later.

Referring to FIG. 7, the second current collector plate 32 is provided with a body 320 including an inner ring 321 having a hole 322 at the center thereof. The body 320 may further include an extension 323 extending radially outward from the inner ring 321. A plurality of the extensions may be arranged to be spaced apart from each other in the circumferential direction.

The second current collector plate 32 is provided with a can connecting portion 324 that surrounds the body 320 from the radially outer side. The body 320 and the can connecting portion 324 may be spaced apart from each other in radial direction.

The second current collector plate 32 is provided with a bridge 33 that connects the body 320 and the can connecting portion 324. A plurality of bridges 33 extending in radial direction may be arranged to be spaced apart from each other in the circumferential direction. The bridge 33 may be disposed between the extensions 323 in the circumferential direction.

The body 320 may be bonded to and electrically connected to a second electrode tab 27-2 provided at the second electrode 22 of the electrode assembly 20. The can connecting portion 324 may be bonded to and electrically connected to the sidewall 11 of the can 10, which will be described later.

### <BATTERY HOUSING>

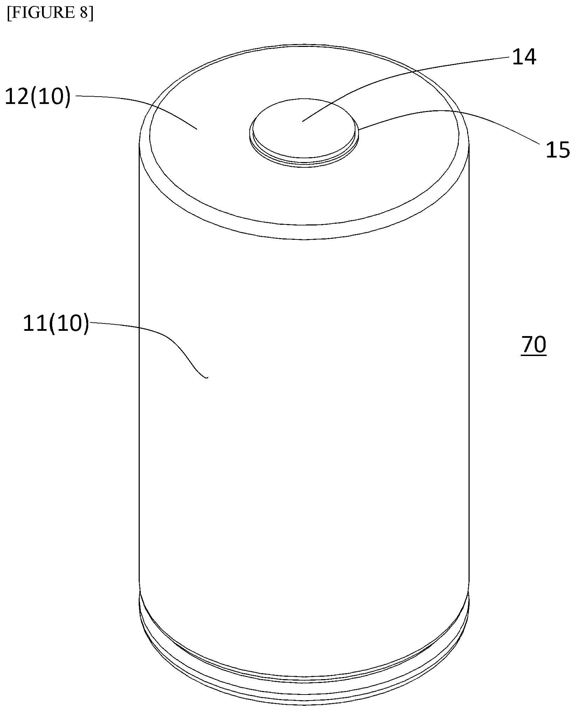

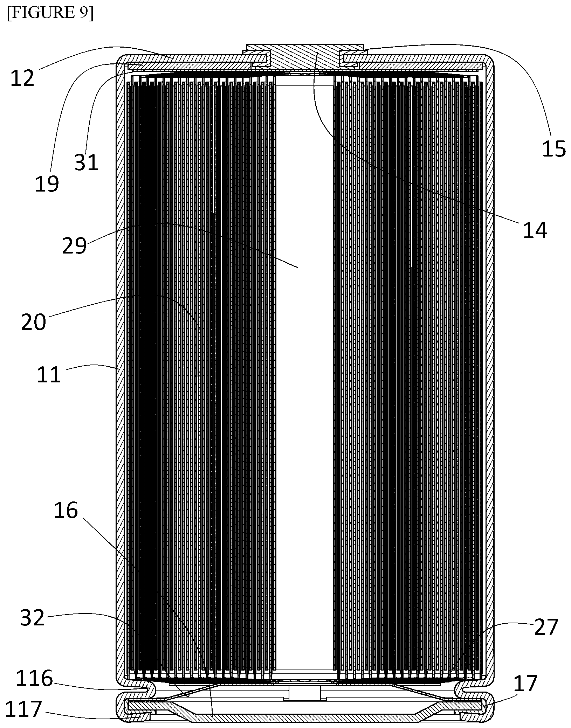

The electrode assembly 20 may be inserted into the housing 10 with the first current collector plate 31 and the second current collector plate 32 bonded thereto as shown in FIGS. 8 and 9.

Referring to FIGS. 8 and 9, the housing 10 may include a metal can. The can 10 includes: a sidewall 11 extending in axial direction between the first end and the second end; and a first end wall 12 connected to the first end of the sidewall 11 and extending in radial direction. The first end wall 12 may have a flat disc shape intersecting the axial direction, and the sidewall 11 may have a circular tube shape extending along the axial direction.

The first end wall 12 and the side wall 11 may be manufactured by subjecting a metal sheet with nickel plated on the surface of steel to deep drawing, and trimming the second end of the side wall 11 with a punch while holding the same with a blank holder. Apparently, the material of the can 10 is not limited thereto.

In the embodiment, the first end wall 12 and the sidewall 11 connected in a monolithic form are exemplified. However, the first end wall 12 and the sidewall 11 may be manufactured as separate parts and then connected by welding or other methods.

The first end wall 12 and the sidewall 11 of the can 10 separate the inner space of the can from the outer space. A terminal hole is provided in the center of the first end wall 12 into which the first electrode terminal 14 may be fitted, and the first electrode terminal 14 is installed by penetrating the first end wall 12 through the terminal hole. The first electrode terminal 14 is processed to be plastically deformed with a terminal gasket 15 interposed therebetween and is fixed to the first end wall 12. The terminal gasket 15 is interposed between the first electrode terminal 14 and the first end wall 12 to seal the interior from the exterior of the first end wall 12 to prevent leakage of the electrolyte and electrically insulate the first electrode terminal 14 from the first end wall 12.

However, the connection method of the first electrode terminal 14 and the can 10 is not limited thereto. For example, as long as the structure is capable of sealing between the first electrode terminal 14 and the can 10 and electrically insulating the first electrode terminal 14 and the can 10, various other fixing methods in addition to these plastic processing method such as bolt-nut coupling scheme and glass seal scheme may also be applied.

The sidewall 11 surrounds the inner space of the can 10 and extends along the axial direction. Accordingly, the inner surface of the sidewall 11 radially faces the outer perimeter of the electrode assembly 20. The second end of the sidewall 11 is open, defining the opening of the can 10.

### <BATTERY CELL ASSEMBLY>

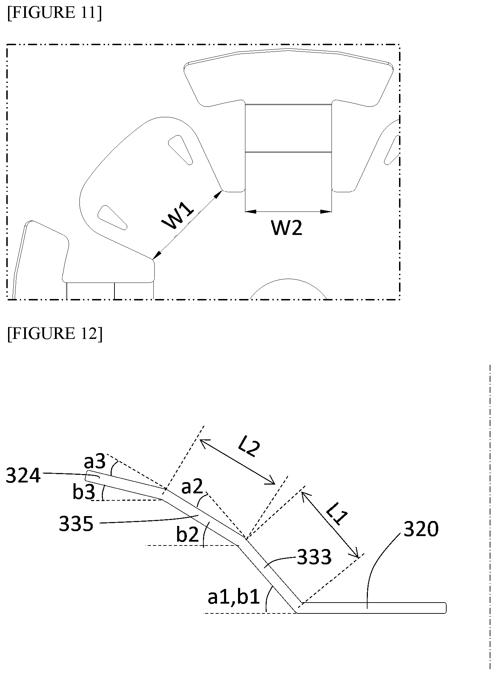

Referring to FIG. 11, the electrode assembly 20 is accommodated in the can 10 with the first current collector plate 31 aligned toward the first end wall 12 of the can 10. An insulator 19 is interposed between the first current collector plate 31 and the first end wall 12 to electrically insulate the first current collector plate 31 and the first end wall 12 from each other.

The terminal connecting area 311 of the first current collector plate 31 is electrically connected and fixed to the first electrode terminal 14. In the embodiment, the first electrode terminal 14 fixed to the can 10 is fixed and electrically connected to the surface of the terminal connecting area 311 of the first current collector plate 31 by thermal bonding such as welding. The first electrode terminal 14 of the can 10 and the terminal connecting area 311 of the first current collector plate 31 may be connected after the electrode assembly 20 is inserted in the can 10.

Accordingly, the first electrode terminal 14 may have a first polarity corresponding to the first electrode 21.

With the electrode assembly 20 accommodated in the can 10, the second current collector plate 32 is placed on the opening side. After the electrode assembly 20 is accommodated in the can 10, the area near the second end of the sidewall 11 is compressed radially inward and plastically processed to form a concave beading 116. Such beading process may be performed so as to position the beading 116 axially between the can connecting portion 324 of the second current collector plate 32 and the electrode assembly 20.

The can connecting portion 324 of the second current collector plate 32 faces and is in contact with the axially outer surface of the beading 116. To ensure a stable electrical connection between the second current collector plate 32 and the sidewall 11, the can connecting portion 324 and the beading 116 may be welded.

Next, an electrolyte is injected into the can 10.

After injecting the electrolyte, the edge of the second end wall 16 having the form of a lid or cap is placed on the beading 116 where the can connecting portion 324 of the second current collector plate is placed, covering the opening of the can 10. Specifically, a lid gasket 17 is interposed between the edge of the second end wall 16 and the sidewall 11, and the second end of the sidewall 11 is caulked radially inward to form a crimped portion 117. The lid gasket 17 is compressed by the beading 116 and the crimped portion 117, thereby sealing the radially outer periphery of the second end wall 16 to the second axial end of the sidewall 11.

The can connecting portion 324 of the second current collector plate 32 is electrically connected to the can 10 near the second axial end of the sidewall 11. Accordingly, the sidewall 11 may have a second polarity corresponding to the second electrode 22.

The first end wall 12 is electrically connected to the sidewall 11. Therefore, the first end wall 12 may also have the second polarity. The diameter of the head portion of the first electrode terminal 14, located on the outer side of the first end wall 12, may be approximately 1/3 of that of the first end wall 12. That is, the outer surface of the first end wall 12 may have a sufficient area for bonding the bus bar.

According to the embodiment, both the first electrode terminal 14 and the second electrode terminal 12 may be disposed at the first axial end of the battery cell. Therefore, both the bus bar connected to the first electrode terminal 14 and the bus bar connected to the second electrode terminal 12 may be disposed at the upper portion of the battery cell. In the embodiment, the first electrode terminal 14 serves as the anode terminal, and the second electrode terminal 12 serves as the cathode terminal.

In addition, the insulator 19 described above electrically insulates the second electrode terminal 12 from the first current collector plate 31 to prevent short circuit therebetween.

### [CURRENT COLLECTING PLATE]

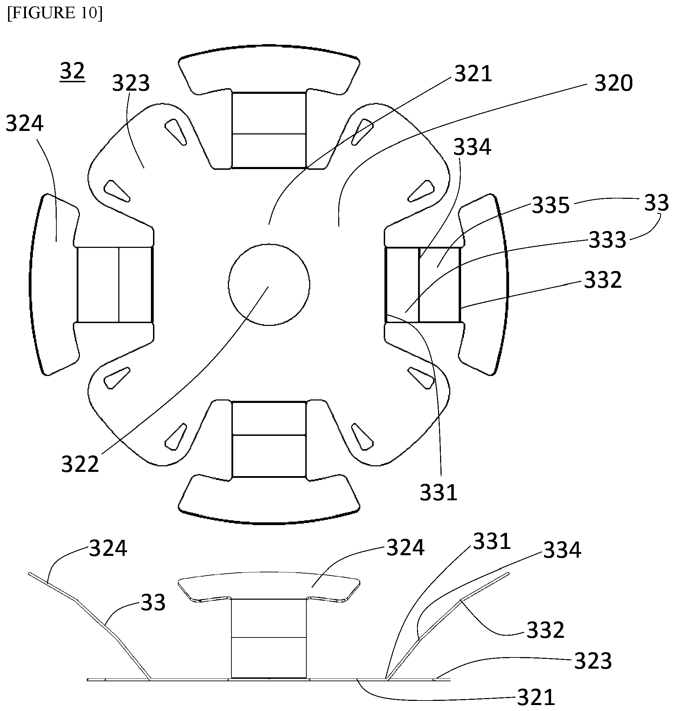

Referring to FIGS. 10 to 12, the current collecting plate 32 includes: the body 320 in contact with and electrically connected to the electrode tab 27; the can connecting portion 324 in contact with and electrically connected to the can 10 at the radially outer side of the body 320; and the bridge 33 connecting the can connecting portion 324 and the body 320 in the radial direction.

The body 320 includes: the extension 323 bonded to the electrode tab 27; and the inner ring 321 connected to the extension 323 at the radially inner side and having a hole 322 provided in the center thereof.

The can connecting portion 324 is disposed radially and axially outer than the body 320 via the bridge 33.

The bridge 33 includes, in order from the radially inner side to the radially outer side, an inner bent portion 331, an inner bridge 333, a bridge bent portion 334, an outer bridge 335 and an outer bent portion 332.

The inner bridge 333 is connected to the body 320 through the inner bent portion 331 that is bent from the outer radial end toward the outer side of the body 320 by a first angle a1, and extends radially outward and axially outward from the inner bent portion 331 by a first extension length L1.

Accordingly, the inner bridge 333 extends radially outward and axially outward toward the outer side at a first slope b1.

The outer bridge 335 is connected to the inner bridge 333 through the bridge bent portion 334 that is bent radially outward from the outer radial end of the inner bridge 333 by a second angle a2, and extends radially outward and axially outward from the bridge bent portion 334 by a second extension length L2.

Accordingly, the outer bridge 335 extends radially outward and axially outward at a second slope b2.

The can connecting portion 324 is connected to the outer bridge 335 through the outer bent portion 332 provided at the outer radial end of the outer bridge 335. By the outer bent portion 332, the can connecting portion 324 is bent radially outward from the outer radial end of the outer bridge 335 by a third angle a3.

Accordingly, the can connecting portion 324 extends radially outward and axially outward at a third slope b3.

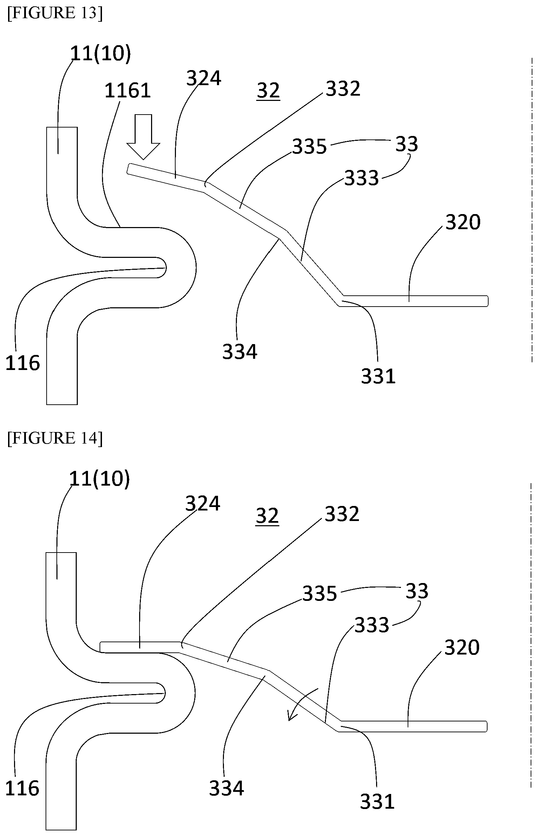

Referring to FIG. 13, with the body 320 of the current collecting plate 32 is bonded to the electrode tab 27 of the electrode assembly 20, when the beading 116 is formed by compressing the sidewall 11 radially inward from the axially outer side of the sidewall 11 after accommodating the electrode assembly 20 and the current collecting plate 32 in the can 10, an axially outer surface 1161 is formed on the beading 116.

In this state, when the can connecting portion 324 is pressed in the axial direction to bring the can connecting portion 324 into contact with the axially outer surface 1161, the inner bent portion 331 of the cantilever-shaped bridge 33 is primarily deformed, and the can connecting portion 324 comes into contact with the axially outer surface 1161 as shown in FIG. 14.

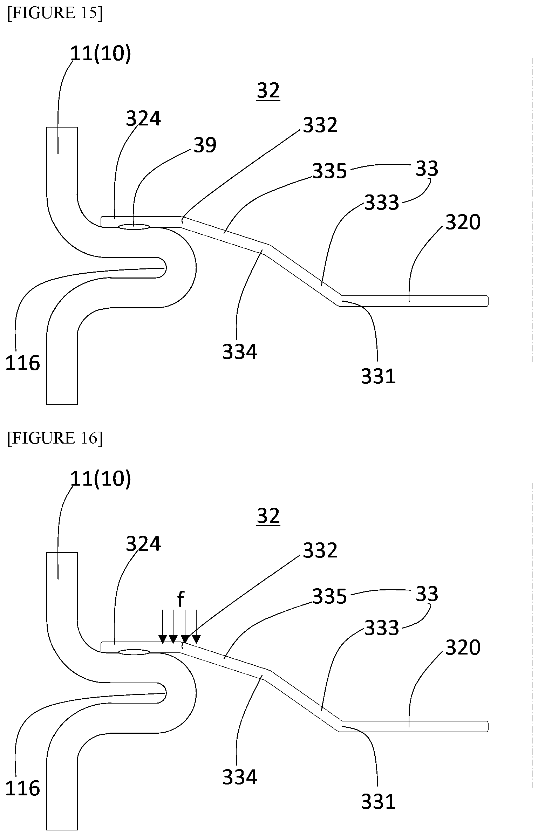

Thereafter, as shown in FIG. 15, a welded portion 39 is formed to temporarily fix the can connecting portion 324 to the beading 116. The welded portion 39 may be simply formed by tab welding.

As shown in FIG. 9, when the edge of the can 10 is compressed against the crimped portion 117 with the cap gasket 17 interposed therebetween, the force of the cap 16 and cap gasket 17, which are compressed axially inward by the crimped portion 117, acts as a distributed load f at the boundary between the bridge 33 and the can connecting portion 324 spaced apart from the beading 116 as shown in FIG. 16.

However, as shown in FIGS. 10 and 11, the circumferential width of the can connecting portion 324 is greater than that of the outer bridge 335 such that the distributed load f intensively deforms the outer bent portion 332 and the adjacent outer bridge 335.

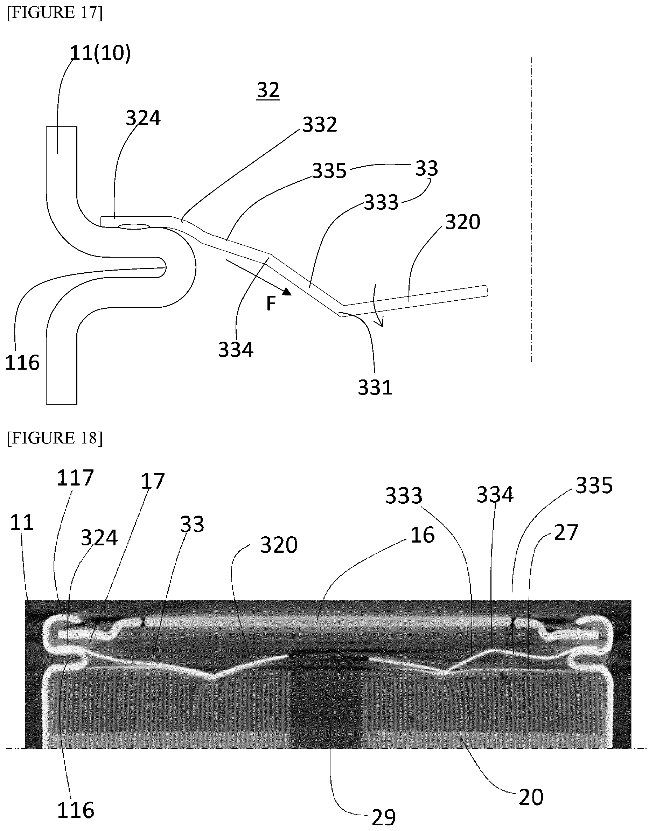

As a result, as shown in FIG. 17, the outer bridge 335 is bent axially inward such that the force F is transmitted to the inner bent portion 331 along the extending direction of the bridge 33, thereby axially compressing the inner bent portion 331 inward.

Due to such deformation behavior of the current collecting plate 32, the outer radial end of the body 320 is deformed in a manner that the outer radial end digs into the electrode assembly 20 in the axial direction as shown in FIG. 18.

Such deformation is caused by the distributed load f intensively deforming the outer bent portion 332 and the adjacent outer bridge 335. Furthermore, it may be confirmed that such deformation is caused by the failure to expand the bending angle of the bridge bent portion 334 when the external force F acts in the extending direction of the bridge 33. In addition, it may be confirmed that such deformation is caused by the failure to expand the bending angle of the inner bent portion 331 when the external force F acts in the extending direction of the bridge 33. Furthermore, it may be confirmed that the abnormal deformation is caused by the bridge 33 not being sufficiently buckled due to the high rigidity thereof when the external force F acts in the extending direction of the bridge 33.

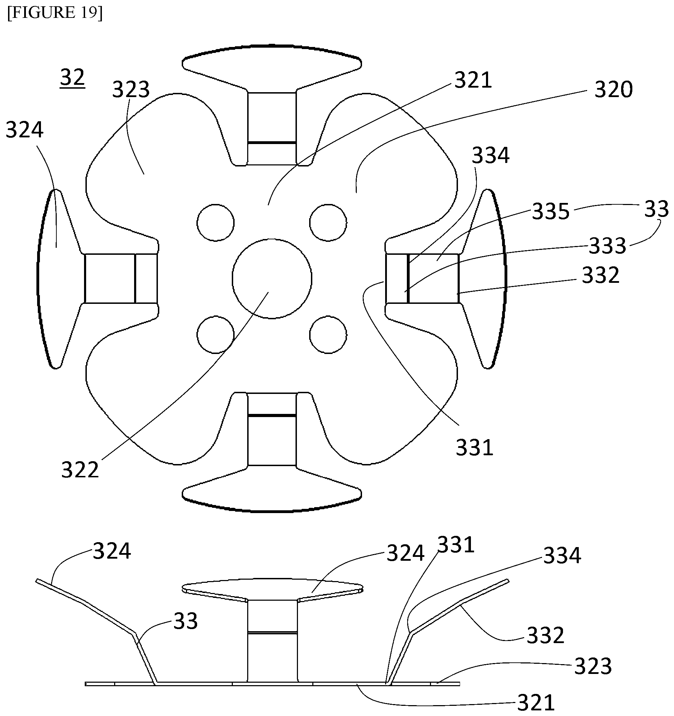

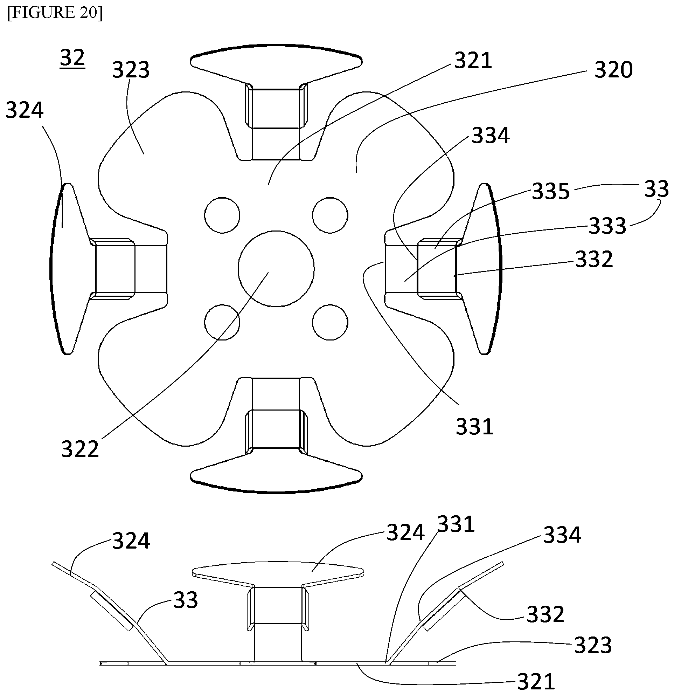

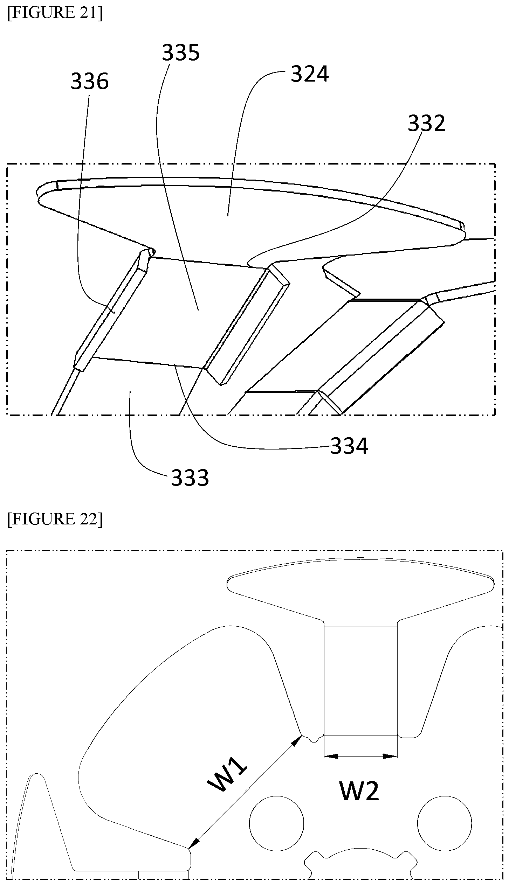

As in the first embodiment shown in FIGS. 19 and 22 and the second embodiment shown in FIGS. 20 to 22, the present invention provides a structure for eliminate the cause of the above-described abnormal deformation.

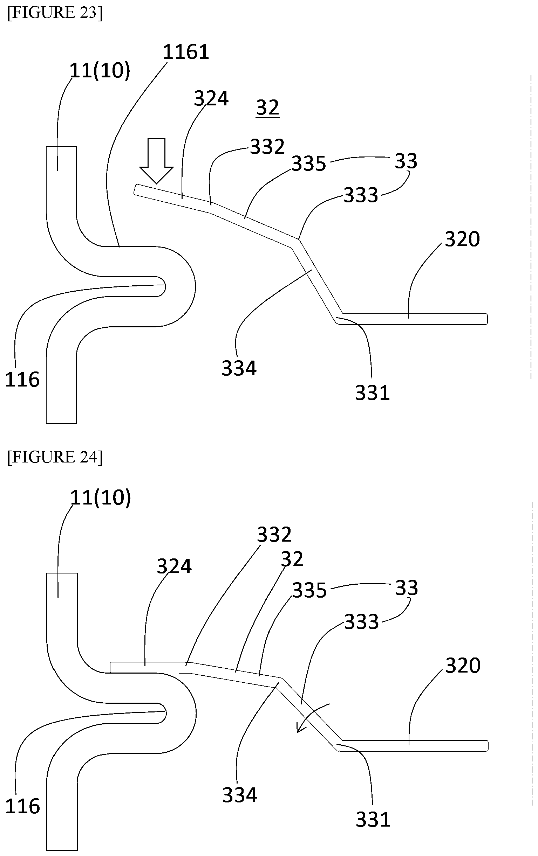

Referring to FIGS. 19 and 23, in the current collecting plate 32 according to the first embodiment, the first angle a1 of the inner bent portion 331 is set to be equal to or greater than 60 degrees and equal to or less than 75 degrees. Even when the bridge 33 is deformed to bring the can connecting portion 324 into contact with the beading 116, the first slope b1 of the inner bent portion 331 may be sufficiently secured, as shown in FIG. 24, compared to the comparative example described above.

As a result, even when the external force F acts in the extending direction of the bridge 33, the moment arm of the external force F transmitted to the inner bent portion 331 through the outer bridge 335 is long enough such that the external force may be induced to act in a direction that expands the bending angle a1 of the inner bent portion 331, and at the same time, may be induced to act in a direction that expands the bending angle a2 of the bridge bent portion 334.

Meanwhile, when the first angle a1 is less than 60 degrees, there is a risk that the first slope b1 is not sufficiently secured after the bridge 33 is deformed to bring the can connecting portion 324 into contact with the beading 116 as shown in FIG. 23.

In addition, when the first angle a1 is greater than 75 degrees, the first extension length L1 of the inner bridge 333 may not be sufficient due to axial space constraints, which may prevent the moment arm from being elongated.

Referring to FIGS. 19 and 23, the third slope b3 of the can connecting portion 324 is set to be equal to or greater than 20 degrees and equal to or less than 35 degrees. As s result, even when the bridge 33 is deformed to bring the can connecting portion 324 into contact with the beading 116, the amount of deformation of the bridge 33 may be limited as shown in FIG. 24 such that the first slope b1 of the inner bent portion 331 may be sufficiently secured.

When the third slope b3 is equal to or greater than 35 degrees, there is a risk that the amount of deformation of the bridge 33 for bringing the can connecting portion 324 into contact with the beading 116 is excessive, and thus the first slope b1 may not be sufficiently secured after deforming the bridge 33.

Meanwhile, when the third slope b3 is less than 20 degrees, sufficient space in the axial direction cannot be secured between the can connecting portion 324 and the electrode assembly 20 as shown in FIG. 23 such that the can connecting portion 324 may interfere with the beading 116 while processing the beading 116.

Referring to FIGS. 19 and 23, the third angle a3 of the outer bent portion 332 is set to be equal to or greater than 5 degrees and equal to or less than 20 degrees.

When the third angle a3 is less than 5 degrees, the bending angle is virtually nonexistent such that the effect of concentrating bending deformation at the outer bent portion 332 is prevented from taking effect despite the distributed load f applied thereto, and thus, the possibility of the outer bridge 335 undergoing bending deformation may not be ruled out.

Meanwhile, when the third angle a3 exceeds 20 degrees, sufficient space in the axial direction cannot be secured between the can connecting portion 324 and the electrode assembly 20 as shown in FIG. 23 such that the can connecting portion 324 may interfere with the beading 116 while processing the beading 116.

Referring to FIGS. 19 and 23, in the current collecting plate 32 according to the first embodiment, the second angle a2 of the bridge bent portion 334 is set to be equal to or greater than 25 degrees and equal to or less than 40 degrees. When the second angle a2 exceeds 25 degrees, even when the external force F acts in the extending direction of the bridge 33, the moment arm of the external force F transmitted to the inner bent portion 331 through the outer bridge 335 is long enough such that the external force may be induced to act in a direction that expands the bending angle a1 of the inner bent portion 331, and at the same time, may be induced to act in a direction that expands the bending angle a2 of the bridge bent portion 334.

Meanwhile, when the second angle a2 exceeds 40 degrees, sufficient space in the axial direction cannot be secured between the can connecting portion 324 and the electrode assembly 20 such that the can connecting portion 324 may interfere with the beading 116 while processing the beading 116.

Next, referring to FIGS. 20 and 21, the current collecting plate 32 according to the second embodiment is provided with a reinforcing portion 336 formed by bending the widthwise edge of the outer bridge 335 axially inward in a manner that the widthwise end of the outer bridge 335 faces the electrode assembly 20. That is, the outer bridge 335 further includes the reinforcing portion 336 compared to the inner bridge 333.

Accordingly, the second moment of area of the outer bridge 335 as viewed in the extending direction of the outer bridge 335 becomes larger than that of the inner bridge 333 as viewed in the extending direction of the inner bridge 333.

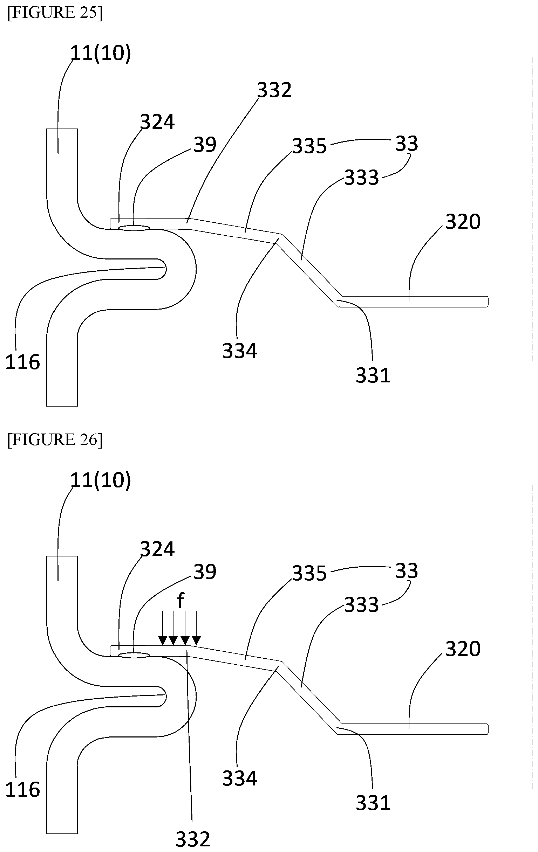

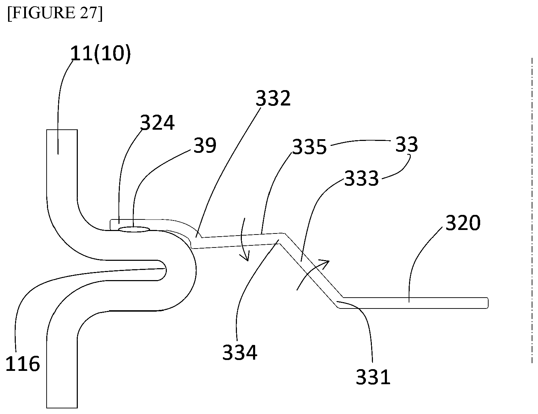

As a result, as shown in FIG. 26, the distributed load f applied when processing the crimped portion 117 causes deformation concentrated in the outer bent portion 332 and the adjacent can connecting portion 324 with relatively low bending rigidity, causing the outer bent portion 332 to descend further axially inward, and inducing reverse bending of the outer bent portion 332 as shown in FIG. 27.

Preferably, the can connecting portion 324 has a shape having a width gradually increasing as extends from the outer bent portion 332, thereby further inducing the above-described deformation.

Accordingly, the moment arm of the external force F transmitted to the inner bent portion 331 through the outer bridge 335 is long enough such that the external force is induced to act in a direction that expands the bending angle a1 of the inner bent portion 331 and, at the same time, in a direction that expands the bending angle a2 of the bridge bent portion 334. In particular, since the outer bridge 335 has high bending rigidity along the entire extending direction, the load is more concentrated on the bridge bent portion 334, thereby inducing more reliable bending expansion.

To secure a moment arm and facilitate the bending of the bent part, the first extension length L1 of the inner bridge 333 may be set to be equal to or greater than 0.5 times and equal to or less than 2 times the second extension length L2 of the outer bridge 335. That is, the extension lengths of the inner bridge 333 and the outer bridge 335 may be set such that the difference is no more than twice.

Meanwhile, the body 320 of the current collecting plate 32 further includes the extension 323 arranged between the bridges 33 in the circumferential direction and extending radially outward from the outer radial end of the body 320.

According to the embodiment, the first width W1 of the connecting portion of the extension 323 and the body 320, measured in the circumferential direction, is set to be equal to or greater than 1.5 times and equal to or less than 2.5 times the second width W2 of the connecting portion of the bridge 33 and the body 320. Thus, within the limited circumferential dimension of the current collecting plate 32, the width of the connecting portion of the bridge 33 and the body 320 is restricted from increasing, thereby enhancing the deformation compliance of the inner bent portion 331.

Specifically, the diameter of the current collecting plate 32 is equal to or greater than 35mm and equal to or less than 46mm, and four extensions 323 and four bridges 33 may be provided.

In the embodiment, the first width W1 is approximately 8mm to 9mm, and the second width W2 is approximately 3.5mm to 4.5mm.

As a result, the buckling resistance of the bridge 33 may be reduced. Even when the current collecting plate 32 is not deformed in the designed direction due to unexpected deformation of the current collecting plate 32 before assembly, the deformation caused by the external force is concentrated on the bending or buckling deformation of the bridge 33 such that the external force is prevented from being transmitted to the body 320.

The assembly process of a cylindrical secondary battery using the current collecting plate 32 of the embodiment will be described with reference to FIGS. 23 to 27. Even when the bridge 33 is deformed to bring the can connecting portion 324 into contact with the beading 116 as shown in FIG. 23, the first slope b1 may be sufficiently secured as shown in FIG. 24 such that the moment arm of the outer bridge 335 with respect to the inner bent portion 331 is sufficiently secured.

Furthermore, as shown in FIG. 26, even when a distributed load f is applied near the outer bent portion 332 during the processing of the crimped portion 117, the outer bent portion 332 is sufficiently lowered and reversely bent, and the bending is also induced to increase the first angle a1 and second angle a2. Additionally, as shown in FIG. 27, the outer bridge 335 has the second slope b2 extending axially inward from a bridge bent portion 334 as extends radially outward.

Therefore, the distributed load f does not press the inner bent portion 331 axially inward, and as a result, the deformation of the current collecting plate 32 that may occur during the crimping process has no effect on the electrode assembly 20.

It should be understood that the described embodiments are illustrative in all respects and not restrictive, and the scope of the present invention will be indicated by the following claims rather than the described detailed description. And the meaning and scope of the claims to be described later, as well as all changes and modifications derived from the equivalent concept should be interpreted as being included in the scope of the present invention.

Although the present invention has been described with reference to the exemplified drawings, it is to be understood that the present invention is not limited to the embodiments and drawings disclosed in this specification, and those skilled in the art will appreciate that various modifications are possible without departing from the scope and idea of the present invention. Further, although the operating effects according to the configuration of the present invention are not explicitly described while describing an embodiment of the present invention, it should be appreciated that predictable effects are also to be recognized by the configuration.

## Claims

1. A current collecting plate (32) of a cylindrical secondary battery, the current collecting plate comprising:
a body (320) in contact with and electrically connected to an electrode tab (27) of an electrode assembly (20);
a can connecting portion (324) disposed axially outer and radially outer than the body (320) and provided to be in contact with and electrically connected to at least any one of a can (10) accommodating the electrode assembly (20) and a cap (16) covering an open end of the can (10); and
a bridge (33) extending in a radial direction and having an inner radial end connected to the body (320) and an outer radial end connected to the can connecting portion (324),
wherein the bridge (33) comprises: an inner bridge (333) connected to the body (320) through an inner bent portion (331) bent axially outward from an outer radial end of the body (320) by a first angle (a1), the inner bridge (333) extending radially outward and axially outward from the inner bent portion (331); and an outer bridge (335) connected to the inner bridge (333) through a bridge bent portion (334) bent radially outward from an outer radial end of the inner bridge (333) by a second angle (a2), and extending radially outward from the bridge bent portion (334),
the can connecting portion (324) is connected to the outer bridge (335) through an outer bent portion (332) provided at an outer radial end of the outer bridge (335), and
the first angle (a1) is equal to or greater than 60 degrees and equal to or less than 75 degrees.

2. The current collecting plate (32) of claim 1, wherein a third slope (b3) calculated as a ratio of axially outer side to radially outer side of the can connecting portion (324) is equal to or greater than 20 degrees and equal to or less than 35 degrees.

3. The current collecting plate (32) of claim 2, wherein the can connecting portion (324) is bent radially outward by a third angle (a3) at the outer radial end of the outer bridge (335) by the outer bent portion (332), and
the third angle (a3) is equal to or greater than 5 degrees and equal to or less than 20 degrees.

4. The current collecting plate (32) of claim 1, wherein the second angle (a2) is equal to or greater than 25 degrees and equal to or less than 40 degrees.

5. The current collecting plate (32) of claim 1, wherein a first extension length (L1) of the inner bridge (333) is equal to or greater than 0.5 times and equal to or less than 2 times a second extension length (L2) of the outer bridge (335).

6. The current collecting plate (32) of claim 1, wherein the body (320) comprises an extension (323) disposed between bridges (33) in circumferential direction and extending radially outward from the outer radial end of the body (320), and
a first width (W1) of a connecting portion between the extension (323) and the body (320) is equal to or greater than 1.5 times and equal to or less than 2.5 times a second width (W2) of a connecting portion between the bridge (33) and the body (320).

7. The current collecting plate (32) of claim 6, wherein the extensions (323) and the bridges (33) are respectively provided as four.

8. The current collecting plate (32) of claim 7, wherein a diameter of the current collecting plate (32) is equal to or greater than 35mm and equal to or less than 46mm.

9. The current collecting plate (32) of claim 1, wherein the can connecting portion (324) has a shape with a width gradually increasing as extends from the outer bent portion (332).

10. A current collecting plate (32) of a cylindrical secondary battery, the current collecting plate comprising:
a body (320) in contact with and electrically connected to an electrode tab (27) of an electrode assembly (20);
a can connecting portion (324) disposed axially outer and radially outer than the body (320) and provided to be in contact with and electrically connected to at least any one of a can (10) accommodating the electrode assembly (20) and a cap (16) covering an open end of the can (10); and
a bridge (33) extending in a radial direction and having an inner radial end connected to the body (320) and an outer radial end connected to the can connecting portion (324),
wherein the bridge (33) comprises: an inner bridge (333) connected to the body (320) through an inner bent portion (331) bent axially outward from an outer radial end of the body (320) by a first angle (a1), the inner bridge (333) extending radially outward and axially outward from the inner bent portion (331); and an outer bridge (335) connected to the inner bridge (333) through a bridge bent portion (334) bent radially outward from an outer radial end of the inner bridge (333) by a second angle (a2), and extending radially outward from the bridge bent portion (334),
the can connecting portion (324) is connected to the outer bridge (335) through an outer bent portion (332) provided at an outer radial end of the outer bridge (335), and
a second moment of area of the outer bridge (335) as viewed in an extending direction of the outer bridge (335) is greater than that of the inner bridge (333) as viewed in an extending direction of the inner bridge (333).

11. The current collecting plate (32) of claim 10, wherein a reinforcing portion (336) where a widthwise end of the outer bridge (335) is bent axially inwardly is provided at a widthwise edge of the outer bridge (335).

12. The current collecting plate (32) of claim 1, wherein the body (320) comprises an extension (323) disposed between bridges (33) in circumferential direction and extending radially outward from the outer radial end of the body (320), and
a first width (W1) of a connecting portion between the extension (323) and the body (320) is equal to or larger than 1.5 times and equal to or smaller than 2.5 times a second width (W2) of a connecting portion between the bridge (33) and the body (320).

13. A cylindrical secondary battery comprising:
an electrode assembly (20) provided with an electrode tab (27) at an axial end thereof;
a can (10) accommodating the electrode assembly (20);
a cap (16) covering an open end of the can (10); and
a current collecting plate (32) of any one of claims 1 to 12 electrically connected to the electrode tab (27),
wherein the can (10) is provided with a beading (116) where a sidewall (11) of the can (10) is recessed radially inward between the electrode assembly (20) and the cap (16) in the axial direction,
a can connecting portion (324) of the current collecting plate (32) is in contact with an axially outer surface (1161) of the beading (116),
an edge of the cap (16) is pressed by the beading (116) and a crimped portion (117) of the sidewall (11) with a cap gasket (17) interposed therebetween, and
the can connecting portion (324) is interposed between the cap gasket (17) and the beading (116).

14. The cylindrical secondary battery of claim 13, wherein the can connecting portion (324) is bent axially outward from an outer radial end of an outer bridge (335) by an outer bent portion (332).

15. The cylindrical secondary battery of claim 13, wherein an outer bridge (335) has a second slope (b2) extending axially inward from a bridge bent portion (334) as extends radially outward.
